# EUROPEAN PATENT APPLICATION

(11) **EP 3 741 603 A1**
(43) Date of publication of application: **25.11.2020**
(21) Application number: 19425036.1
(22) Date of filing: 20.05.2019
(51) Int. Cl.: B60K 15/04, B65D 55/16

(54) **CLOSING ASSEMBLY FOR FUEL TANKS OF VEHICLES**

(71) Applicant: F.A.R.M.A. S.r.l. Fabbrica Accessori Ricambi Moto e Auto, 40059 Frazione Fossatone-Medicinia (BO) (IT)
(72) Inventor: Poma, Armando, 40060 Dozza BO (IT)
(74) Representative: Modiano, Micaela Nadia

(57) **Abstract**

A closing assembly for fuel tanks of vehicles, which comprises at least one fuel cap (2), which is configured to close a filler neck associated with a fuel tank of a vehicle, and an accessory element (3), which is configured to further fasten the fuel cap (2) to the filler neck and prevent the loss of the fuel cap (2).

The element (3) is substantially constituted by a lace which comprises a flexible stem (4), inserted with a first end (4a) thereof into a hole (5) defined by a protruding lug (6) of the fuel cap (2), and a pair of first flexible and mutually opposite teeth (7a, 7b), of mutually different lengths, which extend transversely from the first end (4a) in order to obstruct the extraction of the latter (4a) from the hole (5). The hole (5) has a passage opening that is configured to permit the passage of the first tooth (7b) of greater length and the joint passage of the stem (4) and of the first tooth (7a) of shorter length, if they are arranged side-by-side in parallel. Furthermore, the hole (5) has a passage opening that is configured to obstruct the joint passage of the first teeth (7a, 7b), if they are arranged longitudinally side-by-side.

## Description

The present invention relates to a closing assembly for fuel tanks of vehicles.

As is well known, in motor vehicles access to fuel tanks is controlled by a fuel cap, which is usually arranged in a configuration to close a filler neck, i.e. a substantially axially symmetric hollow body, open outward along a side of the vehicle and connected directly or indirectly to the fuel tank.

This general structure is likewise adopted for tanks of other substances used for the operation of the vehicle, such as for example the tanks for the solution known as ADBlue (which is a registered trademark), which is becoming increasingly widespread due to its ability to reduce emissions of nitrogen oxides in the exhaust gases of Diesel engines.

In all these cases, the user can proceed with refueling after having temporarily removed the fuel cap from the closed configuration and in this step the need is felt to guard against or at least reduce the risk of loss, or even simply the risk of accidental fall, of the fuel cap. In fact, if it falls, the fuel cap could collect dirt and impurities, which could find their way into the fuel tank once the closed configuration is restored, or damage may be caused to the contrivances inside the fuel cap (such as for example the valve assemblies that make possible the exchange of air with the outside and/or the assemblies for key actuation).

One way of performing the task outlined above consists of providing ways for coupling the fuel cap by interlocking with a conveniently shaped seat, provided on the inner wall of the flap usually found on the side of the vehicle to close the recess in which the fuel cap is located (and into which the filler neck leads).

However, this solution is not entirely satisfactory, in that the interlocking coupling is unstable: the user bumping against it during the refueling operations or in any case when he or she moves around the vehicle can easily result in the fuel cap falling. Furthermore, sometimes more distracted users forget to couple the fuel cap to the fuel tank flap, and simply place it on the bonnet or hood or in the immediate vicinity of the vehicle, thus risking what explained above.

Therefore, in substitution for or in addition to the coupling by interlocking with the flap, often vehicle makers provide the fuel cap with a perforated lug, which receives one end of a lace made of rubber or polymeric material, which is coupled at the opposite end with the outer edge of the filler neck, thus ensuring a mutual fastening between the latter and the fuel cap, even when the latter is temporarily removed from the closed configuration in order to allow refueling.

Such implementation solution is however not devoid of drawbacks.

In fact, the ways with which the coupling between the lace and the fuel cap is obtained are designed to facilitate the insertion of the end of the lace into the perforated lug, but precisely for this reason they do not ensure the stability of the fastening obtained: if the fuel cap is pulled firmly, it is possible to cause the extraction of the lace and therefore the decoupling, thus losing the desired functionality and, moreover, failing to comply with the increasingly stringent regulations in the sector.

The aim of the present invention is to solve the above mentioned problems, by providing a closing assembly that comprises a fuel cap arranged so as to close a fuel tank of the vehicle, which adopts practical contrivances to guard against the danger of loss of that fuel cap.

Within this aim, an object of the invention is to provide an accessory element that makes it possible to guard against the danger of loss of the fuel cap arranged so as to close a fuel tank of the vehicle.

Another object of the invention is to provide a closing assembly that combines practical ways of fastening the fuel cap to the respective filler neck and effective contrivances against the accidental disengagement of the former.

Another object of the invention is to provide a closing assembly that ensures a high reliability of operation.

Another object of the invention is to provide a closing assembly that adopts an alternative technical and structural architecture to those of conventional assemblies.

Another object of the invention is to provide a closing assembly that can be easily implemented using elements and materials that are readily available on the market.

Another object of the invention is to provide a closing assembly that is of low cost and is safely applied.

This aim and these and other objects which will become better apparent hereinafter are achieved by a closing assembly according to claim 1 and by an accessory element according to claim 13.

Further characteristics and advantages of the invention will become better apparent from the detailed description that follows of a preferred, but not exclusive, embodiment of the closing assembly and of the accessory element according to the invention, which is illustrated by way of non-limiting example in the accompanying drawings, wherein:
Figure 1 is a perspective view of the closing assembly according to the invention;
Figure 2 is a front elevation view of the closing assembly in Figure 1, with the accessory element and the lug of the fuel cap in cross-section;
Figures 3 and 4 show, in a detail of Figure 2, two possible arrangements assumed by the accessory element and of its first teeth in particular;

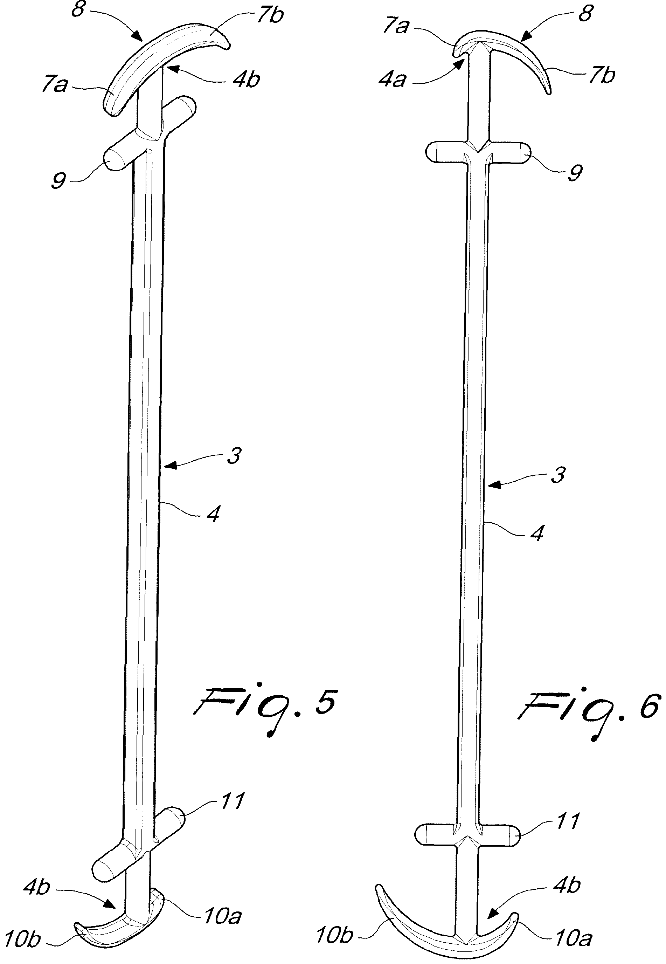

Figure 5 is a perspective view of the accessory element according to the invention;
Figure 6 is a front elevation view of the accessory element in Figure 5.

With particular reference to the figures, the reference numeral 1 generally designates a closing assembly for fuel tanks of vehicles, which comprises first of all at least one fuel cap 2, which is configured to close a filler neck associated with the fuel tank of a vehicle.

It should be noted in this regard that typically the filler neck is a substantially axially symmetric sleeve, which is arranged in direct or indirect communication with a respective fuel tank and which is intercepted by the fuel cap 2 at the other end (where it is directed toward the outside), when it is arranged in the closed configuration. In such context, the assembly 1 can have applications with filler necks of any type, associated with fuel tanks or tanks for other substances (for example ADBlue®), in vehicles of any type. Preferably however, the assembly 1 is intended to be installed on motor vehicles such as cars or, even more, such as trucks, semitrailer trucks, articulated vehicles, vans and other motor vehicles for professional use, and on earth movement machines, agricultural machinery or the like.

According to methods that are per se well known, the fuel cap 2 closes the filler neck in that it can be screwed onto or otherwise engaged with the end section of the filler neck, moreover offering further assurances of fastening by virtue of a key-operated mechanism that can be integrated inside it. However, no further details will be given of the specific implementation solution of the fuel cap 2, of its internal contrivances (if any), or of the way in which it closes the filler neck, as these are all well known in the sector. Moreover, as will be evident from the description in the following paragraphs, the invention can have applications on substantially any type of cap 2, practically independently of the specific method with which the latter is provided (thus demonstrating maximum versatility).

The assembly 1 comprises at least one accessory element 3, which is configured to result in a further fastening of the fuel cap 2 to the filler neck and to prevent the loss of the fuel cap 2. In other words, the fastening ensured by the element 3 is maintained even when the fuel cap 2, unscrewed or howsoever disengaged from the end section of the filler neck, is not arranged to close the latter (for example in order to allow refilling of the fuel tank). The element 3 can be directly coupled to the filler neck (as in the solution that will be described in the following pages, or to an element that is in any case integral therewith and/or with the vehicle).

According to the invention, the element 3 is substantially constituted by a lace which comprises a flexible stem 4, inserted with a first end 4a thereof into a hole 5 defined by a protruding lug 6 of the fuel cap 2.

Furthermore, the lace comprises a pair of first flexible and mutually opposite teeth 7a, 7b, of mutually different lengths. The first teeth 7a, 7b extend transversely (with respect to the longitudinal direction of the stem 4) from the first end 4a so as to determine an obstacle to the extraction of the first end 4a from the hole 5.

The hole 5 has a passage opening that is configured (chosen to be of such dimensions as) to permit the passage (in particular, the insertion) of the first tooth 7b of greater length and to permit the joint passage (in particular, the insertion) of the stem 4 and of the first tooth 7a of shorter length, if they are arranged side-by-side in parallel.

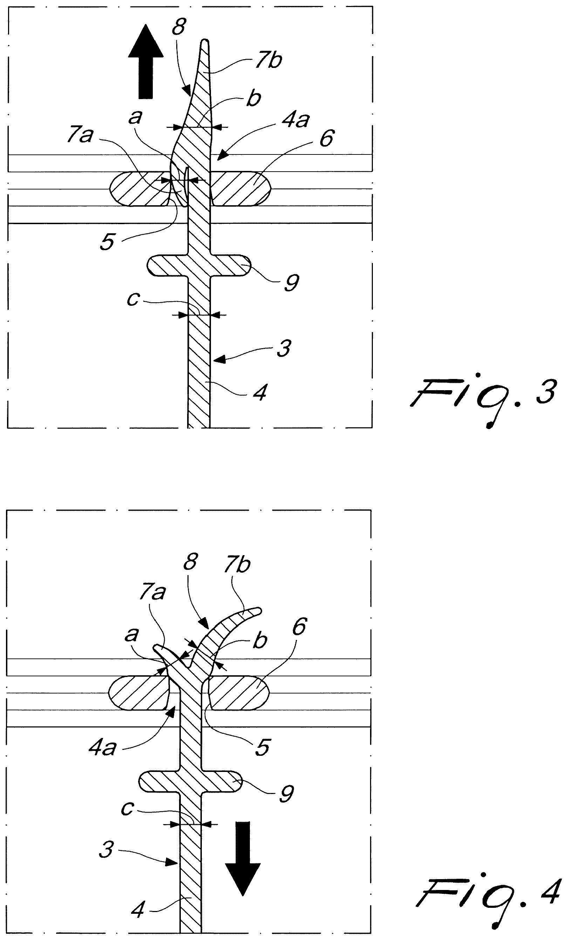

In this manner, the hole 5 in fact allows the insertion into it of the first tooth 7b of greater length, and therefore of the stem 4 and of the first tooth 7a of shorter length, with the latter temporarily aligned with the stem 4 and abutting against the latter (as in Figure 3).

In particular, in order to obtain such results the passage opening of the hole 5 is larger than the transverse cross-section of the first tooth 7b of greater length and is larger than the sum of the transverse cross-sections of the stem 4 and of the first tooth 7a of shorter length.

It should be noted that the transverse cross-sections of the first teeth 7a, 7b and of the stem 4 are measured perpendicular to their longitudinal extension: for greater practicality of identification however, for these transverse cross-sections the respective measurements are indicated parametrically in the accompanying Figures 3-4, respectively with "a", "b" and "c". The geometric specifics introduced above can therefore also be expressed by stating that the passage opening of the hole 5 is greater than b and also than a+c. It should likewise be noted that if the stem 4 and/or the first teeth 7a, 7b have a variable transverse cross-section, then for the purposes of this discussion the transverse cross-section to be considered is the maximum one.

With regard to the hole 5, it is preferably square (as in the solution shown in the accompanying figures), circular or elliptical, and the passage opening is dictated by the relevant dimensions in each instance of the corresponding geometric figures.

It should be noted that the passage opening can optionally be chosen to be greater even than the sum of the transverse cross-sections of the first tooth 7b of greater length and of the stem 4 (b+c).

In addition, according to the invention the hole 5 has a passage opening that is configured (chosen to be of such dimensions as) to obstruct the joint passage (in particular, the extraction) of the first teeth 7a, 7b, if they are arranged longitudinally side-by-side.

If the first teeth 7a, 7b, when kept practically transverse to the stem 4, normally represent an obstacle to extraction, then the feature introduced in the last paragraph means that extraction is opposed even in the event of stresses imparted directly or indirectly on the lace or on the fuel cap 2, which could in fact bring the first teeth 7a, 7b to be arranged longitudinally aligned (following the deformation shown in Figure 4). For example, this could happen by gripping the stem 4 and trying to force the extraction of the lace from the hole 5.

In particular, in order to achieve such object the passage opening of the hole 5 is smaller than the sum of the transverse cross-sections of the stem 4 and of the first teeth 7a, 7b (or, equivalently, the passage opening is smaller than a+b).

So in fact, the peculiar choices introduced above make it possible to slide the lace into the hole 5 of the lug 6 (thus creating the desired fastening between the fuel cap 2 and the lace, which in turn can be connected at the other end to the filler neck) and to prevent its subsequent extraction: this already achieves the set aim.

Even more specifically, to ensure an excellent ability in obstructing extraction and at the same time ensure practical methods of inserting the first end 4a into the hole 5 (as will be illustrated below), one of the first teeth (in the case in the accompanying figures, it is the tooth indicated by 7b) has a length that is at least double that of the other of the first teeth (7a in the figures).

In an embodiment of significant practical interest, illustrated in the accompanying figures for the purposes of non-limiting example of application of the invention, the lace comprises a flexible crossmember 8, which defines the first teeth 7a, 7b with respective mutually complementary portions and which is anchored to the first end 4a of the stem 4 at an inner point thereof, interposed between the aforementioned portions (between the first teeth 7a, 7b). In other words, as can clearly be seen from the accompanying figures, the stem 4 and the crossmember 8 in conjunction form a substantially T-shaped structure. It should in any case be noted that the first teeth 7a, 7b can also be obtained in another manner, while remaining within the scope of protection claimed herein.

Conveniently, the first teeth 7a, 7b are made of an elastically deformable material, in order to enable them to temporarily alter their configuration during the step of inserting the first end 4a, and to subsequently restore the non-deformed configuration, in which they are kept transverse with respect to the stem 4 and they oppose the extraction. The stem 4 can also be made of an elastically deformable material (optionally the same material as the first teeth 7a, 7b).

Advantageously, the lace is made (entirely) of synthetic rubber and, even more specifically, in the preferred embodiments, it is made of NBR (acrylonitrile butadiene rubber) or of EPDM rubber (ethylene propylene diene monomer rubber).

Advantageously, at least one of the first teeth 7a, 7b (and preferably both) is usually curved toward the stem 4: this makes it possible to even more effectively obstruct accidental extraction.

If the lace is made of elastically deformable material, the curvature cited previously corresponds to the non-deformed configuration of the first teeth 7a, 7b.

In the preferred, but not limiting, embodiment of the application of the invention, the lace comprises at least one first transverse spar 9, arranged along the stem 4 proximate to the first end 4a (one or a few centimeters from the latter, for example); the first spar 9 defines a stroke limit for inserting the stem 4 into the hole 5, so that only a final portion of the stem 4 can be inserted into the hole 5.

It should be noted that the way in which the accessory element 3 achieves the fastening to the filler neck can be any, while remaining within the scope of protection claimed herein.

Typically however, the filler neck has, to this end, a protruding tab that forms a slot, entirely similarly to the lug 6 and to the hole 5 of the fuel cap 2. In an embodiment of the invention that is of particular practical interest, which is also illustrated in the accompanying figures for the purposes of non-limiting example of application of the invention, the way in which the element 3 ensures the fastening to the filler neck replicates the way in which the fastening to the fuel cap 2 is obtained. In more detail, the lace has a pair of second flexible and mutually opposite teeth 10a, 10b, of mutually different lengths. The second teeth 10a, 10b extend transversely (with respect to the longitudinal direction of the stem 4) from a second end 4b of the stem 4, which is opposite from the first end and is configured to be inserted into the slot formed by the protruding tab of the filler neck (or belonging to another component of the vehicle, proximate to the filler neck).

In further analogy with what is described above relating to the method of inserting the stem 4 into the hole 5, preferably the lace comprises a second transverse spar 11, which is arranged along the stem 4 proximate to the second end 4b (one or a few centimeters from the latter, for example). In turn therefore, the second spar 11 defines a stroke limit for inserting the stem 4 into the slot of the filler neck.

More generally, the shape, the dimensions, the materials and the characteristics of the second teeth 10a, 10b (including in relation to the slot) can replicate those of the first teeth 7a, 7b and of the hole 5. As can also be seen in the accompanying figures, to this end in the preferred (but not exclusive) embodiment the element 3 is symmetrical with respect to the midpoint of the stem 4.

For the same assembly 1 according to the invention, another object of the present discussion and of the protection claimed herein is an accessory element 3 which is configured to prevent the loss of a fuel cap 2 for closing a filler neck associated with a fuel tank of a vehicle, such element 3 being likewise configured as a further fastening between the fuel cap 2 and the filler neck 2.

According to the invention, such accessory element 3 is constituted by a lace according to what is described up to this point.

Therefore, with the present discussion the applicant first of all claims protection of the production, marketing and/or offer for sale of a closing assembly 1 (sold on its own or associated with the filler neck and/or with other components, or with the vehicle) which comprises both the fuel cap 2 and the element 3. Furthermore, with the present invention, protection is claimed of the production, marketing and/or offer for sale of the element 3 alone, sold individually, as a spare part and/or for installation on vehicles and/or in association with fuel caps 2 and filler necks that are already installed or in any case are sourced separately.

Operation of the closing assembly and of the accessory element according to the invention is the following.

At the installation stage, it is necessary to provide the fastening between the lace and the fuel cap 2: to this end, as a first step the first tooth 7b of greater length needs to be inserted into the hole 5 of the lug 6. This activity is facilitated by giving the first tooth double (or more) the length of the other tooth, in that it is easier to grasp it and introduce it into the hole 5; the other tooth can be kept shorter in order to not impede the operation.

It should be noted that to this end the hole 5 is chosen with a passage opening configured to permit the passage of the first tooth 7b of greater length (the passage opening is chosen to be larger than the transverse cross-section of the latter).

Subsequently, by exerting sufficient traction on the lace and grasping the first tooth 7b of greater length, which has already been passed through the hole 5 (and protrudes from the other side), it is possible to pull the stem 4 and the first tooth 7a of shorter length, thus forcing the insertion of the latter into the hole 5 as well and, progressively, of the stem 4. It should be noted that in this step the flexibility of the lace and of the teeth 7a, 7b is used to full advantage, as the choices described previously of the dimensions of the passage opening and of the lace. During the entrainment and insertion in fact, the first tooth 7a of shorter length abuts against the lug 6 and is folded until it abuts against and aligns with the stem 4 (as in Figure 3), thus reducing the overall space occupation and allowing the insertion into the hole 5. This is of course by virtue of the fact that the passage opening of the hole 5 is configured to permit the joint passage of the stem 4 and of the first tooth 7a of shorter length, if they are arranged side-by-side in parallel.

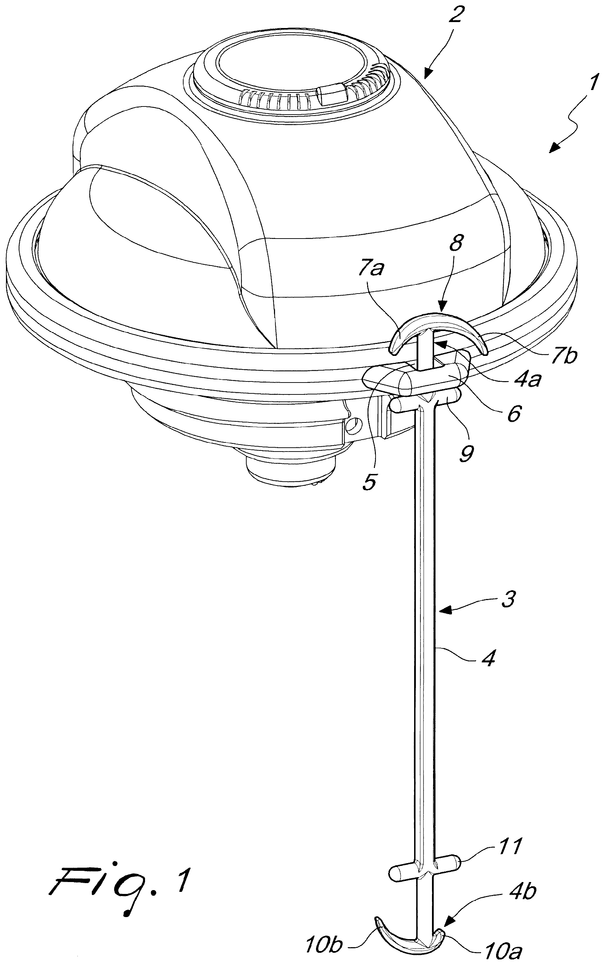

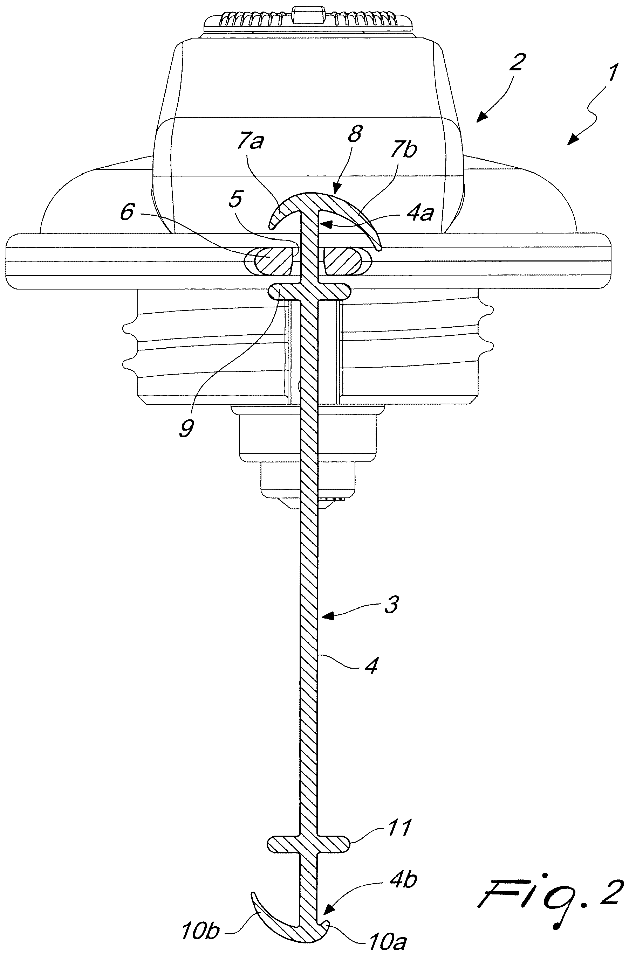

When the other first tooth 7b of greater length has also passed through the hole 5, the configuration of normal use has effectively been obtained, in which both first teeth 7a, 7b are transverse with respect to the stem 4 (it can be the user to arrange them thus or, preferably, the elastic return of the material can be utilized), as in Figures 1 and 2, and perform a first contrasting action against extraction.

In such condition, the element 3 is coupled to the fuel cap 2 and, if coupled at the other end to the filler neck, makes it possible to prevent the loss of the fuel cap 2 and/or its falling, even when the latter is disengaged from the end section of the filler neck in order to allow refueling (or for other reasons). That is to say, the fuel cap 2 can be removed and moved away from the filler neck, but the lace (which is flexible so as to allow the movement of the fuel cap 2) prevents its loss and fall.

As already seen, in such situation an intense stress on the stem 4 or, in the opposite direction, on the fuel cap 2, could tend to slide out the lace, thus removing the desired fastening between the element 3 and the fuel cap 2. When, owing to such stress, the first end 4a is pressed against the hole 5 and forced to reenter it, the first teeth 7a, 7b are bent away from the stem 4 and tend to be arranged longitudinally side-by-side (Figure 4). The choice to adopt a passage opening that is configured to obstruct the joint passage of the first teeth 7a, 7b, if they are arranged in this manner, effectively opposes the extraction, thus also ensuring in such conditions that the fastening is maintained between the fuel cap 2 and the element 3 (and the filler neck).

The peculiar dimensional choices given above, which relate to the elements responsible for the coupling between the accessory element 3 and the stopper 2, therefore guard against the risk of loss of the latter since they do not allow in any way the unfastening of the fuel cap 2 from the element 3 (and therefore from the filler neck, to which the lace can be coupled at the other end).

This result is obtained without compromising the ease of installation and in particular the simplicity of provision of the fastening between the element 3 and the fuel cap 2.

Precisely because of the advantages that can be obtained by using the first teeth 7a, 7b and a hole 5 working together according to the foregoing description, for the provision (simple and long-lasting) of the fastening between the element 3 and the fuel cap 2, preferably these components are replicated to fasten the element 3 to the filler neck as well, therefore using second teeth 10a, 10b which work together in the same way with a protruding slot on the filler neck.

It is emphasized that the specifications illustrated above relate solely to the hole 5 of the fuel cap 2 and the lace (the element 3): it thus appears evident that the invention can be effectively adopted on fuel caps 2 of various types, shapes and dimensions, independently of their internal contrivances (on condition only that there is a lug 6 provided with an adequate hole 5).

Finally it is noted that the element 3 can be made of a single material (be it synthetic rubber or another material) and preferably it can be obtained in a single piece by molding, therefore in simply and economically.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs

## Claims

1. A closing assembly for fuel tanks of vehicles, which comprises at least one fuel cap (2), which is configured to close a filler neck associated with a fuel tank of a vehicle, and an accessory element (3), which is configured to further fasten said fuel cap (2) to the filler neck and prevent the loss of the fuel cap (2), **characterized in that** said element (3) is substantially constituted by a lace which comprises a flexible stem (4), inserted with a first end (4a) thereof into a hole (5) defined by a protruding lug (6) of said fuel cap (2), and a pair of first flexible and mutually opposite teeth (7a, 7b), of mutually different lengths, which extend transversely from said first end (4a) in order to obstruct the extraction of said first end (4a) from said hole (5), said hole (5) having a passage opening that is configured to permit the passage of said first tooth (7b) of greater length and the joint passage of said stem (4) and of said first tooth (7a) of shorter length, if they are arranged side-by-side in parallel, said hole (5) having a passage opening that is configured to obstruct the joint passage of said first teeth (7a, 7b), if they are arranged longitudinally side-by-side.

2. The closing assembly according to claim 1, **characterized in that** said passage opening of said hole (5) is larger than the transverse cross-section of said first tooth (7b) of greater length and is larger than the sum of the transverse cross-sections of said stem (4) and of said first tooth (7a) of shorter length.

3. The closing assembly according to claim 1 or 2, **characterized in that** said passage opening of said hole (5) is smaller than the sum of the transverse cross-sections of said stem (4) and of said first teeth (7a, 7b).

4. The closing assembly according to one or more of the preceding claims, **characterized in that** one of said first teeth (7b) has a length that is at least double than that of the other of said first teeth (7a).

5. The closing assembly according to one or more of the preceding claims, **characterized in that** said lace comprises a flexible crossmember (8), which defines said first teeth (7a, 7b) with respective mutually complementary portions and is anchored to said first end (4a) of said stem (4) at an inner point thereof, interposed between said portions.

6. The closing assembly according to one or more of the preceding claims, **characterized in that** said first teeth (7a, 7b) are made of an elastically deformable material.

7. The closing assembly according to one or more of the preceding claims, **characterized in that** said lace is made of synthetic rubber.

8. The closing assembly according to claim 7, **characterized in that** said lace is made of NBR or of EPDM rubber.

9. The closing assembly according to one or more of the preceding claims, **characterized in that** at least one of said first teeth (7a, 7b) is usually curved toward said stem (4).

10. The closing assembly according to one or more of the preceding claims, **characterized in that** said lace comprises at least one first transverse spar (9), which is arranged along said stem (4) proximate to said first end (4a) and defines a stroke limit for the insertion of said stem (4) into said hole (5).

11. The closing assembly according to one or more of the preceding claims, **characterized in that** said lace has a pair of second flexible and mutually opposite teeth (10a, 10b), of mutually different lengths, which extend transversely from a second end (4b) of said stem (4), which is opposite from said first end (4a) and is configured for insertion into a slot formed by a protruding tab of the filler neck.

12. The closing assembly according to claim 11, **characterized in that** said lace comprises a second transverse spar (11), which is arranged along said stem (4) proximate to said second end (4b) and defines a stroke limit for the insertion of said stem (4) into the slot.

13. An accessory element, configured to prevent the loss of a fuel cap (2) for closing a filler neck associated with a fuel tank of a vehicle, and configured as a further fastening between the fuel cap (2) and the filler neck, **characterized in that** it is constituted by a lace according to one or more of the preceding claims.
